# EUROPÄISCHE PATENTSCHRIFT

(11) **EP 2 690 340 B1**
(45) Veröffentlichungstag und Bekanntmachung des Hinweises auf die Patenterteilung: **17.06.2015**
(21) Anmeldenummer: 13003441.6
(22) Anmeldetag: 09.07.2013
(51) Int. Cl.: F16L 55/165, B29C 35/10, G01N 27/12, G01N 27/20, G01M 3/40, E03F 3/06, B29C 35/08

(54) **Auskleidungsschlauch und Verfahren zur Überprüfung eines Auskleidungsschlauchs aus harzgetränktem Fasermaterial**
Lining hose and method for inspecting a lining hose made from resin-saturated fibrous material
Gaine de chemisage et procédé de vérification d'une gaine de chemisage en matériau fibreux imprégné de résine

(30) Priorität: 28.07.2012 DE 102012014997
(43) Veröffentlichungstag der Anmeldung: 29.01.2014
(73) Patentinhaber: Brandenburger Patentverwertung GBR, 76829 Landau (DE)
(72) Erfinder: Zügel, Frank, 71282 Hemmingen (DE)
(74) Vertreter: Kesselhut, Wolf

(56) Entgegenhaltungen:
- EP-B1- 0 712 352
- DE-A1- 19 817 413
- DE-A1-102010 018 479
- US-A- 5 551 484

## Beschreibung

Die Erfindung betrifft einen Auskleidungsschlauch aus harzgetränktem härtbaren Fasermaterial mit einer Einrichtung zur Überprüfung der Durchhärtung des Fasermaterials sowie ein Verfahren zur Überprüfung der Durchhärtung eines solchen Auskleidungsschlauchs nach dem Einziehen in einen zu sanierenden Kanal gemäß dem Oberbegriff von Anspruch 1 und 9.

Auf dem Gebiet der grabenlosen Sanierung von defekten Rohrleitungen, wie z.B. defekten Abwasserleitungen oder Abwasserkanälen, werden zunehmend Auskleidungsschläuche eingesetzt, die als "Inliner" bezeichnet werden und aus einem Fasermaterial, insbesondere aus Glasfasergewebe bestehen, welches mit einem flüssigen Reaktionharz getränkt ist, das nach dem Einziehen des Auskleidungsschlauchs in die Rohrleitung und Expandieren desselben mit Hilfe von Druckluft durch Einleiten von Heißdampf oder heißem Wasser oder das Licht einer Strahlungsquelle ausgehärtet wird, die durch den Auskleidungsschlauch hindurch bewegt wird und die Innenwände des Auskleidungsschlauchs bestrahlt.

Hierbei ergibt sich das Problem, dass die Dichtheit der sanierten Rohrleitung nach der Aushärtung des Reaktionsharzes sehr stark von der ordnungsgemäßen Durchführung des Aushärtevorgangs abhängt, da bereits ein einziger kleiner Abschnitt, in dem das Reaktionsharz nicht oder nicht vollständig durchgehärtet ist ausreicht, eine mechanische Schwachstelle in der Form zu erzeugen, dass äußere Einflusse, wie z.B. die wirkenden Erdlasten, nicht getragen werden können oder der Inliner inneren Einflüssen, wie z.B. Hochdruck Spülungen nicht Stand hält.

Ein weiteres Problem besteht hierbei darin, dass die zuvor erwähnten undichten Stellen, in denen das Reaktionsharz z.B. durch ein zu kurze Bestrahlungsdauer oder Schatteneffekte lokal nicht vollständig ausgehärtet ist, im Nachhinein nicht oder nur in sehr aufwändiger Weise repariert werden können. Aufgrund der derzeit geltenden strengen behördlichen Auflagen an durch Auskleidungsschläuche sanierte Kanäle müssen daher in der Praxis oftmals die Auskleidungsschläuche vollständig wieder aus dem Kanal entfernt werden, was mit einem sehr hohen Auffand und entsprechenden Kosten verbunden ist.

Das gattungsbildende Dokument DE 198 17 413 A1 offenbart eine Vorrichtung und ein Verfahren zur Sanierung von Rohrleitungen, bei dem ein mit UV-härtbarem Harz getränkter Faserschlauch in das Rohr eingeführt und dort aufgeblasen wird. Eine UV-Lichtquelle wird durch das Rohr gezogen und härtet das Harz mittels Strahlung aus. Die Geschwindigkeit der Lichtquelle wird in Abhängigkeit von der durch die exotherme Härtungsreaktion erzeugten Temperatur gesteuert. Dazu wird durch IR-Sensoren die Temperatur in der inneren Oberfläche des Schlauchs gemessen und auf einen Computer übertragen, der eine Temperatur/Zeit-Kurve erstellt und durch speicherprogrammierbare Steuerung die Geschwindigkeit der Lichtquelle regelt.

Das Dokument DE 10 2010 018 479 A1 offenbart einen Auskleidungsschlauch zur Sanierung einer defekten Rohrleitung, der wenigstens eine Lage aus Fasermaterial umfasst, welches mit einem aushärtbaren Reaktionsharz getränkt ist. Der Auskleidungsschlauch zeichnet sich aus durch einen in der Lage aus Fasermaterial angeordneten Kennfaden, insbesondere Farbkennfaden, der sich wenigstens über einen Teilabschnitt des Auskleidungsschlauchs hinweg erstreckt.

Demgemäß ist es eine Aufgabe der vorliegenden Erfindung, einen Auskleidungsschlauch zu schaffen, der nach seiner Verlegung und Aushärtung in einem Kanal die Möglichkeit eröffnet, die vollständige Durchhärtung des Reaktionsharzes zu überprüfen. Eine weitere Aufgabe der Erfindung besteht darin, ein Verfahren zu schaffen, mit welchem sich die Durchhärtung eines in einen zu sanierenden Kanal eingezogenen Auskleidungsschlauchs während des Aushärtevorgangs sowie nach Abschluss desselben überprüfen lässt.

Diese Aufgabe wird erfindungsgemäß durch einen Auskleidungsschlauch und ein Verfahren mit den Merkmalen von Anspruch 1 und 9 gelöst.

Weitere Merkmale der Erfindung sind in den Unteransprüchen enthalten.

Gemäß der Erfindung umfasst ein Auskleidungsschlauch eine oder mehrere Lagen aus Fasermaterial, die mit einem Reaktionsharz getränkt sind, welches in bekannter Weise durch Wärme oder auch elektromagnetische Strahlung, insbesondere UV-Strahlung aushärtbar ist. Die Faserbänder sind hierbei bevorzugt auf einen Innenfolienschlauch aufgebracht, der aus einem bevorzugt styroldichten Kunststoffmaterial, bevorzugt einem thermoplastischen Kunststoffmaterial besteht. Obgleich die Lage oder die Lagen aus Fasermaterial auch durch ein randseitiges Vernähen oder radial überlappendes, der Länge nach Legen von Matten aus Fasermaterial erhalten werden können, werden diese bevorzugt durch fortlaufendes Wickeln von Faserbändern um einen Wickeldorn erhalten, auf den zuvor der endlose Innenfolienschlauch aufgebracht wird. Nachdem der erfindungsgemäße Auskleidungsschlauch im nichtausgehärteten Zustand des Reaktionsharzes in einen zu sanierenden Kanal eingezogen wurde, werden die Enden des Auskleidungsschlauchs verschlossen und dieser mit Druckluft beaufschlagt, so dass sich die Lagen aus Fasermaterial an die Innenseite des Kanals anlegen. Im Anschluss daran erfolgt eine Aushärtung des Auskleidungsschlauchs durch ein Einbringen elektromagnetischer Strahlung, insbesondere von UV-Strahlung, oder aber auch von Wärme, insbesondere von Heißdampf oder einer erhitzten Flüssigkeit, in den Innenraum des Auskleidungsschlauchs, um das Reaktionsharz auszuhärten. Um dabei sicherzustellen, dass das Reaktionsharz, bzw. das Fasermaterial während und/oder nach dem Abschluss des Aushärtungsvorgangs vollständig durchgehärtet ist, umfasst der erfindungsgemäße Auskleidungsschlauch bevorzugt auf seiner Außenseite eine Einrichtung mit der die durch Härtung des Fasermaterials überprüfbar ist.

Diese Einrichtung zur Überprüfung der Durchhärtung des Fasermaterials, umfasst gemäß der bevorzugten Ausführungsform der Erfindung einen ersten und einen zweiten elektrischen Leiter, insbesondere in Form eines ersten und zweiten leitenden, elektrisch nicht isolierten Drahts oder einer flachen Leiterbahn, die sich im Wesentlichen parallel zueinander über die Länge des Auskleidungsschlauchs hinweg erstrecken.

Zwischen den beiden elektrischen Leitern, die bevorzugt über ihre gesamte Länge hinweg parallel zueinander verlaufen, ist ein streifenförmiger Abschnitt aus Reaktionsharz angeordnet, welches im flüssigen Zustand eine höhere elektrische Leitfähigkeit besitzt, als im ausgehärteten Zustand. Hierbei bildet das Reaktionsharz in dem streifenförmigen Abschnitt über die gesamte Länge der beiden Leiter hinweg eine elektrische Leitungsverbindung, über die der elektrische Strom vom einen Leiter aus zum anderen Leiter fließen kann, wenn die Enden der Leiter mit einer Stromquelle oder einem elektrischen Signalgenerator verbunden werden.

Bei der bevorzugten Ausführungsform der Erfindung enthält bevorzugt ausschließlich das Reaktionsharz im streifenförmigen Abschnitt, nicht jedoch das Reaktionsharz, welches im Fasermaterial, welches die Wand des Auskleidungsschlauchs bildet, elektrische Ladungsträger in Form eines oder mehrerer Salze, die dem Reaktionsharz beispielsweise durch Rühren beigemischt werden und in diesem homogen enthalten sind. Um hierbei im Wesentlichen die gleichen Aushärtungsbedingungen zu schaffen, ist das Reaktionsharz, in welches das Salz eingebracht wird, vorzugsweise identisch zu dem Harz, mit welchem das Fasermaterial getränkt wird.

Obgleich sich prinzipiell nahezu jedes organische oder auch anorganische Salz, welches in wässrigen Lösung in positive und negative Ladungsträger zerfällt, als Substanz eignet, welche die Leitfähigkeit des Reaktionsharzes im streifenförmigen Abschnitt vor dem Aushärten des Harzes verringert und nach dem Aushärten um einen demgegenüber vielfachen Wert erhöht, wird bevorzugt ein Salz des Ammoniaks und/oder ein Salz des Kaliums oder Natriums eingesetzt. Ein geeignetes Salz ist beispielsweise Tetraalkylammoniumethylsulfat, welches dem einen Fotoinitiator enthaltenden Reaktionsharz, bevorzugt UP-Harz, in einer Menge von 0,5 bis 10 Gew. %, bevorzugt im Bereich von 1 bis 4 Gew.% und besonders bevorzugt 3 Gew. %, jeweils bezogen auf das Gesamtgewicht des Gemischs durch Rühren beigemischt wird.

In Abhängigkeit von den Temperaturen, der Luftfeuchtigkeit und sonstigen Umgebungsbedingungen ist es ebenso möglich, die gewünschten Eigenschaften des Harzes dadurch zu erhalten, dass eine Mischung von zwei oder mehreren der genannten Salze verwendet wird, um die Leitfähigkeit des Harzes im flüssigen Zustand zu erhöhen und dabei die Eigenschaften des Reaktionsharzes, insbesondere das Aushärtverhalten, an die Eigenschaften des Harzes im Fasermaterial des Auskleidungsschlauchs anzugleichen.

So konnte beispielsweise durch Beimischen von 3 Gew. % Tetraalkylammoniumethylsulfat zu einem bekannten UP-Harz, welches einen UV-Initiator enthielt, ein Harzgemisch erhalten werden, das bei zwei in einem Abstand von ca. 1 cm zueinander angeordneten Leitern aus Kupferdraht mit einer Länge von 0,4 m im flüssigen Zustand einen ohmschen Widerstand im Bereich von anfänglich 12 Mega Ohm erzeugte. Nach einer Bestrahlung der Probe mit einer UV-Dampflampe konnte zunächst eine Verringerung des ohmschen Widerstandes bis auf ca. 200 k Ohm beobachtet werden, bevor der ohmsche Widerstand dann nach einer Bestrahlungsdauer von ca. 4 Minuten wieder sehr stark anstieg und nach ca. 10 Minuten das Ende des Messbereichs des Messgeräts erreichte, der bei 220 Mega Ohm endet.

Nach einem weiteren der Erfindung zu Grunde liegenden Gedanken ist zwischen dem ersten und dem zweiten elektrischen Leiter ein das flüssige Reaktionsharz aufnehmendes Trägermedium, insbesondere ein Polyestervlies oder Glasfaservlies angeordnet, welches das Harz aufsaugt und bindet. Hierdurch ergibt sich der Vorteil, dass das flüssige Reaktionsharz mit den beigemischten Ladungsträgern, bzw. den darin gelösten Salzen trotz des flüssigen Zustandes nicht von den elektrischen Leitern abläuft, wenn der Auskleidungsschlauch vor dem Einziehen in den zu sanierenden Kanal oder während des Transports für eine längere Zeitdauer in eine Seitenlage gebracht wird, in der der eine elektrische Leiter in einer oben liegenden Position und der andere elektrische Leiter in einer darunter liegenden Position angeordnet sind. In einem solchen Falle wird aufgrund der Bindung des Reaktionsharzes an das Vlies ein Herunterlaufen des Harzes wirksam verhindert.

Bei der bevorzugten Ausführungsform des Auskleidungsschlauchs sind der erste und zweite elektrische Leiter bevorzugt in Längsrichtung des Auskleidungsschlauchs betrachtet parallel nebeneinander liegend auf der Außenseite des Auskleidungsschlauchs angeordnet. Obgleich der Abstand zwischen den beiden Leitern auch vergleichsweise klein gehalten werden kann, beispielsweise 0.5 Zentimeter, beträgt der Abstand bei der bevorzugten Ausführungsform vorzugsweise 1 cm oder mehr, um bei einer Variation des Abstandes zwischen den beiden Leitern keine übermäßig großen Schwankungen des gemessenen Widerstandes in Abhängigkeit von der jeweiligen Position auf dem Leiter, die nachfolgend als X-Position bezeichnet wird, zu erhalten. Hierdurch lässt sich beispielsweise durch eine fortlaufende Messung des momentanen Widerstandes an einem Ende der beiden elektrischen Leiter der Aushärtevorgang überwachen und ein Fehler, z.B. eine zu hohe Geschwindigkeit der Strahlungsquelle frühzeitig erkennen und korrigieren.

Gemäß einer weiteren Ausführungsform der Erfindung können der erste und zweite elektrische Leiter im Bereich der äußeren Umfangsfläche auf einander diametral gegenüberliegenden Seiten des Auskleidungsschlauchs angeordnet sein, wodurch es prinzipiell ermöglicht wird, die Aushärtung des Reaktionsharzes über den gesamten Umfang des Auskleidungsschlauchs hinweg zu überprüfen. Obgleich die beiden Leiter in diesem Falle bevorzugt in ein Vlies eingebettet sind, welches den gesamten Umfang des Auskleidungsschlauchs umgibt, besteht ebenfalls die Möglichkeit, die zuletzt auf die Außenseite des Auskleidungsschlauchs aufgebrachte Faserbandlage mit dem leitenden Reaktionsharz zu tränken und die beiden elektrischen Leiter anschließend ähnlich einem Längszugband auf die Ober- und Unterseite des Faserschlauchs aufzulegen, bevor dieser mit einem Außenfolienschlauch umgeben wird.

Gemäß einer weiteren Ausführungsform der Erfindung kann es weiterhin vorgesehen sein, zwei oder mehr Paare von ersten und zweiten elektrischen Leitern und dazwischen angeordneten streifenförmigen Bereichen aus Vliesmaterial in bevorzugt gleichen Abständen um den Umfang des Auskleidungsschlauchs herum anzuordnen, z.B. mit einem relativen Winkelversatz von 120°, 90 ° oder 60° etc., um die vollständige Aushärtung des Reaktionsharzes nach einer Bestrahlung des Fasermaterials von innen her an mehreren Stellen des Umfangs zu überprüfen. Hierdurch ergibt sich der Vorteil, dass die vollständige Durchhärtung des Reaktionsharzes auch im Bereich von Biegungen eines zu sanierenden Kanals mit einer hohen Zuverlässigkeit überprüft werden kann, in denen bei einer Aushärtung mittels UV-Licht häufig Unterschiede in der Bestrahlungsdauer- und Intensität auftreten. Diese ergeben sich z.B. dadurch, dass die Wandlänge auf der Außenseite der Biegung größer ist als auf der Innenseite. Zudem kommt es in solchen Bereichen häufig zu Schattenwürfen, die mitunter zu einer ungleichmäßigen Bestrahlungsintensität und dadurch zu einer ungleichmäßigen Aushärtung führen.

Weiterhin kann es vorgesehen sein, dass sich der streifenförmige Bereich mit den beiden elektrischen Leitern schraubenförmig um die Außenseite des Fasermaterials herum erstreckt. Hierdurch lassen sich Ungleichmäßigkeiten in der Aushärtung frühzeitig mit lediglich einem Paar von elektrischen Leitern erkennen, die insbesondere auf eine unterschiedliche räumliche Strahlungsverteilung des UV-Lichts einer Lichtquelle zurückzuführen sind, welche zum Aushärten des Reaktionsharzes durch den Auskleidungsschlauch hindurch geführt wird. Dies eröffnet die Möglichkeit, die UV-Lampen oder sonstigen Bauteile der Strahlungsquelle frühzeitig nach zu justieren, bevor die fehlerhafte Strahlungsquelle vollständig durch den zu sanierenden Kanal gezogen wurde und im Anschluss nochmals hindurch gezogen werden muss, um eine vollständige Durchhärtung zu erhalten.

Gemäß einem weiteren der Erfindung zu Grunde liegenden Gedanken wird bei dem erfindungsgemäßen Verfahren zur Überprüfung der Durchhärtung eines zuvor beschriebenen Auskleidungsschlauchs zur abschließenden Kontrolle der vollständigen Durchhärtung des Reaktionsharzes nach dem Aushärten desselben der elektrische Widerstand an zwei benachbarten Enden des ersten und zweiten elektrischen Leiters erfasst. Hierfür kann ein bekanntes herkömmliches Ohmmeter eingesetzt werden, dessen Eingänge hierzu lediglich mit den beiden Endabschnitten des ersten und zweiten elektrischen Leiters an einem Ende des Auskleidungsschlauchs verbunden werden müssen. Wenn der vor der Aushärtung lediglich bei wenigen Megaohm liegende gemessene ohmsche Widerstand nach Abschluss des Aushärtevorgangs oberhalb des mit einem herkömmlichen Ohmmeter messbaren Wert von beispielsweise 500 Mega Ohm liegt, ist der Nachweis erbracht, dass der Auskleidungsschlauch vollständig durchgehärtet ist.

Um hierbei zusätzlich sicherzustellen, dass es während des Aushärtevorgangs nicht zu einem Bruch eines der beiden elektrischen Leiter gekommen ist, können die den beiden für die Messung verwendeten Endabschnitten gegenüberliegenden Endabschnitte der beiden elektrischen Leiter am anderen Ende des Auskleidungsschlauchs vor der Durchführung der Messungen kurz geschlossen werden. Durch das Erfassen des Innenwiderstandes der beiden an einem Ende kurz geschlossenen elektrischen Leiter vor dem Beginn der Aushärtung des Reaktionsharzes lässt sich der gesamte Innenwiderstand der in Reihe geschalteten ersten und zweiten Leiter mit einem handelsüblichen Messgerät erfassen, der im Falle von bevorzugt eingesetzten Leitern aus Kupferdraht oder auch Konstantan-Draht um mehrere Größenordnungen über dem Wert des ohmschen Widerstandes liegt, der sich bei geöffneten Leiterenden aufgrund des Widerstandes des elektrisch leitenden Reaktionsharzes ergibt. Hierdurch lassen sich systematische Messfehler auf einfache Weise auch beim Einsatz von ungeschultem Personal mit einfachen Mitteln vermeiden, indem vor und nach dem Aushärtevorgang der ohmsche Widerstand zwischen den geöffneten, bzw. kurz geschlossenen Leitern gemessen und protokolliert wird.

Nach einem weiteren der Erfindung zugrunde liegenden Gedanken wird beim Aushärten des Reaktionsharzes mittels einer Strahlungsquelle, insbesondere eine UV-Strahlungsquelle, die in bekannter Weise mit einer vorgegebenen Geschwindigkeit durch den Innenraum des Auskleidungsschlauchs hindurch bewegt wird, die Geschwindigkeit in Abhängigkeit von dem momentan erfassten Wert des Widerstandes verändert und bevorzugt geregelt wird. Hierbei wird die vom Anmelder erkannte Tatsache zunutze gemacht, dass sich der ohmsche Widerstand des leitenden Reaktionsharzes durch die Einstrahlung von UV-Licht zunächst verringert, bevor dieser wieder ansteigt. Unter Anwendung dieser Erkenntnis wird die Bewegungsgeschwindigkeit der Strahlungsquelle bevorzugt so verändert, dass dieser minimale Widerstandswert während des gesamten Aushärtevorgangs im Wesentlichen konstant gehalten wird. Wenn zu Beginn des Aushärtevorgangs die Strahlungsquelle mit einer vergleichsweise geringen Geschwindigkeit durch den Auskleidungsschlauch gezogen wird, die unterhalb der optimalen Geschwindigkeit liegt, stellt sich ein Wert für den gemessenen momentanen Widerstand ein, der zunächst zu hoch ist. Durch allmähliches Erhöhen der Durchzuggeschwindigkeit verringert sich dann der fortlaufend gemessene Wert für den ohmschen Widerstand solange, bis dieser wieder ansteigt. Durch eine Variation der Durchzugsgeschwindigkeit um den in dieser Weise bestimmten Minimalwert für den fortlaufend gemessenen ohmschen Widerstand kann die Durchzugsgeschwindigkeit der Strahlungsquelle mit geringen Abweichungen auf den minimalen Wert eingestellt werden.

Nach einem weiteren der Erfindung zu Grunde liegenden Gedanken wird nach dem Abschluss eines Aushärtungsvorgangs oder auch während des Aushärtungsvorgangs die Position eines Bereichs, in dem das Reaktionsharz nicht vollständig durchgehärtet ist innerhalb des Auskleidungsschlauchs dadurch bestimmt, der erste und zweite elektrische Leiter bevorzugt an den benachbarten Enden der Leiter über eine elektrische Signalquelle mit einer Folge von elektrischen Spannungspulsen beaufschlagt werden, deren Laufdauer erfasst wird. So lässt sich die Position - die nachfolgend als X-Position bezeichnet wird - an der der nicht vollständig durchgehärtet Bereich im Auskleidungsschlauch angeordnet ist dadurch bestimmen, dass die Laufdauer eines Spannungspulses mit der Ausbreitungsgeschwindigkeit C_{signal} der elektrische Impulse entlang der beiden elektrischen Leiter sowie des entsprechenden leitenden Bereichs zwischen den Leitern multipliziert wird und das Ergebnis durch zwei geteilt wird. Die Ausbreitungsgeschwindigkeit der elektrischen Pulse, die beispielsweise Rechteckimpulse sein können, wird hierbei bevorzugt zuvor durch eine Vergleichsmessung an einem Muster-Auskleidungsschlauch bestimmt. Es versteht sich, dass zur Erhöhung der Messgenauigkeit der durchschnittlichen Laufdauer der Signale auch mehrere aufeinanderfolgende Messungen mit identischen oder unterschiedlichen Signalen vorgenommen werden können, aus denen dann ein Mittelwert für die durchschnittliche Laufdauer errechnet wird. Nachdem die X-Position des Bereichs in der zuvor beschriebenen Weise bestimmt wurde, wird die Strahlungsquelle zu dieser X-Position bewegt und die Innenseite des Auskleidungsschlauchs im Bereich dieser Position erneut bestrahlt, wobei auch in diesem Falle der ohmsche Widerstand zwischen den beiden Leiterenden fortlaufend gemessene wird, um anhand eines ansteigenden Messwertes für den ohmschen Widerstand zu verifizieren, dass die korrekte X-Position ermittelt wurde. Ebenso wir beim Erreichen des vorgegebenen Widerstands-Sollwertes oder Endwertes von z.B. 300 M Ohm die Strahlungsquelle abgeschaltet, um ein Überhitzen der Innenwand des Auskleidungsschlauchs, insbesondere des auf dieser angeordneten Innenfolienschlauchs zu verhindern.

Es versteht sich, dass im Falle von Reaktionsharz, dass nicht durch UV-Licht sondern beispielsweise durch Wärme oder sonstige elektromagnetische Strahlung ausgehärtet wird, die lokale Nachhärtung des Reaktionsharzes durch Einbringen der entsprechenden elektromagnetischen Strahlung und/oder Wärme erfolgt, wobei auch hier während des Nachhärtens der ohmsche elektrische Widerstand an den benachbarten Enden der beiden elektrischen Leiter fortlaufend erfasst und die Nachhärtung beendet wird, wenn der vorgegebene Widerstands-Sollwert, der beispielsweise 300 M Ohm beträgt, erreicht wurde.

Die Erfindung wird nachfolgend mit Bezug auf die Zeichnungen anhand einer bevorzugten Ausführungsform beschrieben.

In den Zeichnungen zeigen,
- Fig. 1: eine schematische Darstellung eines Kanals mit einem eingezogenen Auskleidungsschlauch, auf dessen Außenseite ein mit leitendem Reaktionsharz getränkter Vliesstreifen mit einem ersten und zweiten elektrischen Leiter angeordnet ist, die an einem Ende kurz geschlossen sind, um den Gesamtwiderstand vor Beginn eines Aushärtungsvorgangs zu bestimmen,
- Fig. 2: eine schematische Darstellung des Auskleidungsschlauchs während des Aushärtevorgangs beim Durchziehen einer angedeuteten UV-Strahlungsquelle, die sich an der X-Position im Kanal befindet,
- Fig. 3: eine schematische Darstellung des Auskleidungsschlauchs mit einer Fehlstelle, an der das leitende Reaktionsharz nicht vollständig durchgehärtet ist, und
- Fig. 4: den Auskleidungsschlauch von Fig. 1 bis 3, bei der Lokalisierung der Fehlstelle mit Hilfe eines an die beiden Leiterenden angeschlossenen Signalgenerators.

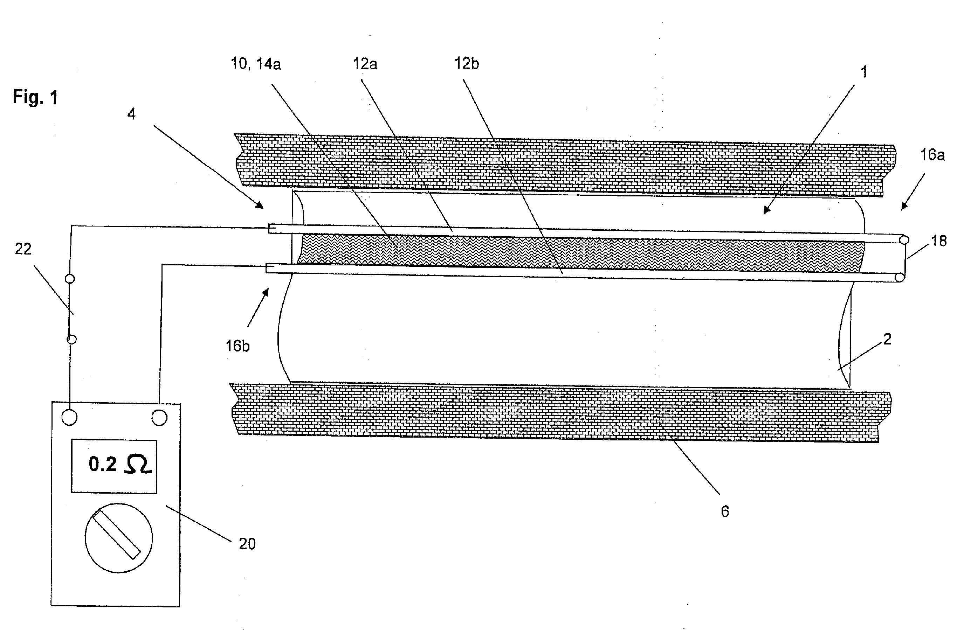

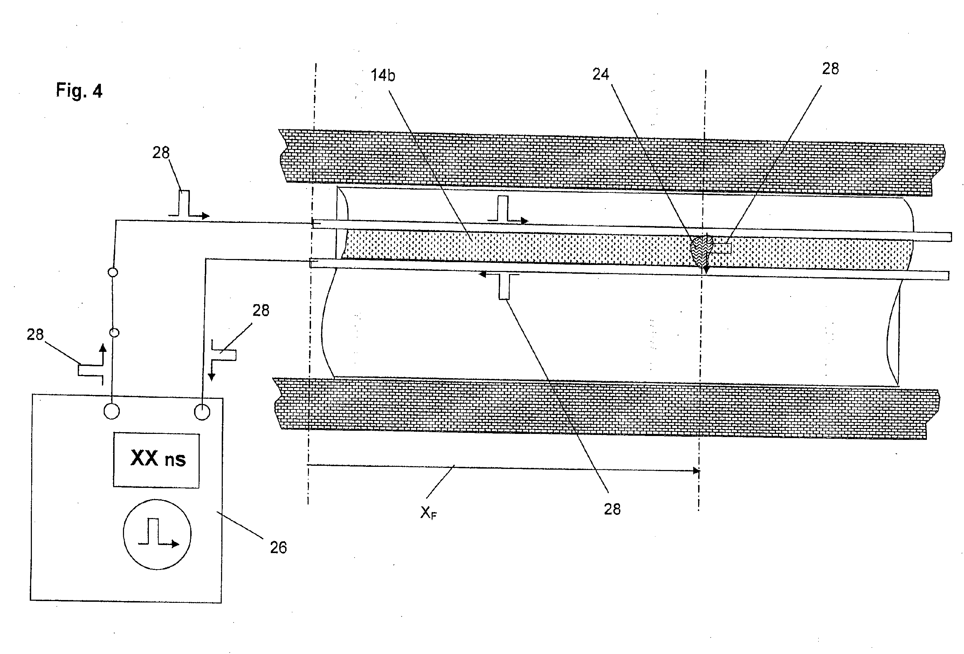

Wie in Fig. 1 bis 4 gezeigt ist, besitzt ein erfindungsgemäßer Auskleidungsschlauch 1 aus Fasermaterial 2, welches mit einem aus darstellungstechnischen Gründen nicht näher gezeigten Reaktionsharz getränkt ist, eine Einrichtung 4, mit der sich die Durchhärtung des Fasermaterials 2 nach dem Einziehen des Auskleidungsschlauchs 1 in einen zu sanierenden Kanal 6, Expandieren desselben mittels Druckluft und Aushärten des Reaktionsharzes mithilfe einer Strahlungsquelle 8 überprüfen lässt. Die Einrichtung 4 umfasst hierzu einen streifenförmigen Abschnitt 10, der aus einem Vlieswerkstoff besteht, welcher auf der Außenseite des Auskleidungsschlauchs 1 angeordnet ist und sich über die gesamte Länge desselben erstreckt. Seitlich des streifenförmigen Abschnitts 10 oder auch überlappend mit dem Vliewerkstoff sind ein erster elektrischer Leiter 12a und ein zweiter elektrischer Leiter 12b bevorzugt aus Nickeldraht angeordnet, die jeweils eine Breite von z.B. 5 mm und eine Höhe von z.B. 2 mm besitzen. Die beiden elektrischen Leiter 12a und 12b, die auch aus unterschiedlichen Werkstoffen bestehen können, z.B. Kupfer und Nickel oder einer sonstigen geeigneten Metalllegierung, sind vorzugsweise in einem Abstand von z.B. 1 cm parallel zueinander in den Vlieswerkstoff eingebettet und begrenzen demnach den streifenförmigen Abschnitt 10 zwischen ihren Längsrändern. Der Vlieswerkstoff ist mit einem elektrisch leitenden flüssigen Reaktionsharz 14a getränkt, welches ebenfalls in elektrischem Kontakt zu den beiden Leitern 12a, 12b steht. Das Reaktionsharz ist bevorzugt das selbe Reaktionsharz wie das Harz, mit welchem das Fasermaterial 2 getränkt ist. Um die elektrische Leitfähigkeit des normaler Weise nicht leitenden Reaktionsharzes bereit zu stellen, sind dem flüssigen Harz elektrische Ladungsträger in Form eines Salzes beigemischt, welches bevorzugt ein Salz des Ammoniaks ist, das im Reaktionsharz in einer Menge von bevorzugt ca. 3 Gew.- % bezogen auf das Gewicht des fertigen Gemischs enthalten ist.

Wie der Darstellung der Fig. 1 hierbei im Detail entnommen werden kann, werden die beiden elektrischen Leiter12a, 12b nach dem Einziehen des Auskleidungsschlauchs 1 in den zu sanierenden Kanal 6 am einen Ende 16a des Auskleidungsschlauchs 1 über eine elektrisch leitende Verbindung 18, beispielsweise eine Klemme, kurz geschlossen und der gesamte Widerstand der kurz geschlossenen Leiter 12a, 12b am anderen Ende 16b gemessen, um sicherzustellen, dass die beiden elektrischen Leiter korrekt arbeiten und insbesondere nicht gebrochen sind. Das Messen des ohmschen Widerstandes am zweiten Ende 16b des Auskleidungsschlauchs 1 erfolgt dabei mit Hilfe eines bekannten handelsüblichen Messgeräts 20, welches einen Messbereich von beispielsweise 1 Ohm bis 220 Mega Ohm, oder auch größer, besitzt. In den Darstellungen ist der elektrische Anschluss des Messgeräts 20 durch einen Schalter 22 angedeutet, der in der Praxis zwar vorgesehen sein kann, jedoch beim Einsatz eines einfachen Widerstandsmessgerätes nicht zwingend nicht erforderlich ist.

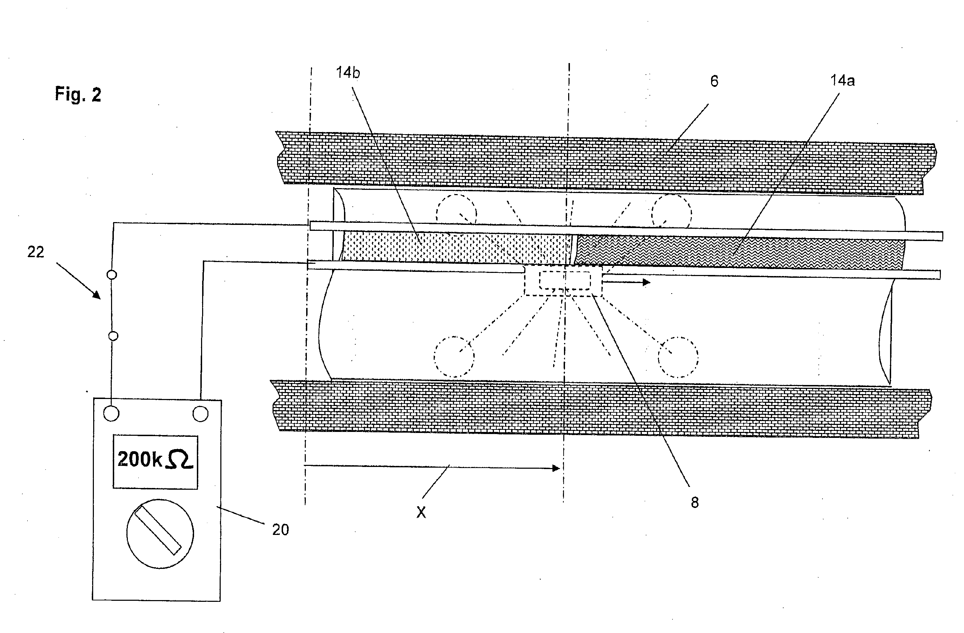

Wie in Fig. 2 gezeigt ist, wird nach dem Einziehen und Expandieren des Auskleidungsschlauchs 1 in den Kanal die Strahlungsquelle 8 über nicht näher gezeigte Zugkabel durch den Innenraum des Kanals hindurchbewegt und die Innenoberfläche des an der Kanalinnenwand anliegenden Auskleidungsschlauchs 1 mit UV-Licht bestrahlt, welches das Fasermaterial 2 des Auskleidungsschlauchs von innen her durchdringt und danach von unten her auf den streifenförmigen Abschnitt 10 trifft. Das UV-Licht wechselwirkt in bekannter Weise mit UV-Initiatoren im flüssigen Reaktionsharz des Fasermaterials 2 sowie auch des flüssigen leitenden Reaktionsharzes 14a im streifenförmigen Abschnitts 10, welche dadurch in Rad-kale zerfallen und eine Polymerisation des jeweiligen Harzes auslösen. Wenn die Strahlungsquelle 8 bei einer vorgegebenen Lichtintensität mit einer vorgegebenen Geschwindigkeit von z.B. 1,5 m/min durch den Auskleidungsschlauch 1 bewegt wird, führt dies in der Regel zu einer vollständigen Durchhärtung des Reaktionsharzes, was durch die unterschiedlichen Schraffuren des streifenförmigen Abschnitts 10 in Fig. 2 angedeutet ist. So ist das Reaktionsharz 14b bis zur Position X der Strahlungsquelle 8 bereits vollständig durchgehärtet und hat dadurch seine elektrische Leitfähigkeit verloren, da sich die elektrischen Ladungsträger nicht mehr frei im Harz bewegen können; wohingegen das Reaktionsharz 14a jenseits der Position X noch flüssig ist und seine ursprüngliche Leitfähigkeit besitzt.

Nachdem die Strahlungsquelle 8 vollständig durch den Auskleidungsschlauch 1 hindurchgezogen wurde und das Harz ausgehärtet ist, wird der ohmsche Widerstand an den beiden Enden der Leiter 12a, 12b abschließend mit dem Messgerät 20 erfasst. Wenn der gemessene ohmsche Widerstand der elektrisch sonst nicht miteinander verbundenen Leiter 12a, 12b oberhalb eines vorgegebenen Widerstands-Sollwerts von z.B. 220 Mega Ohm liegt, ist von einer vollständigen Durchhärtung des leitenden flüssigen Reaktionsharzes 14a im Vlieswerkstoff des streifenförmigen Abschnitts 10 auszugehen, was wiederum bedeutet, dass auch das von seiner Grundzusammensetzung her identische Reaktionsharz im darunter liegenden Fasermaterial 2 vollständig durchgehärtet ist.

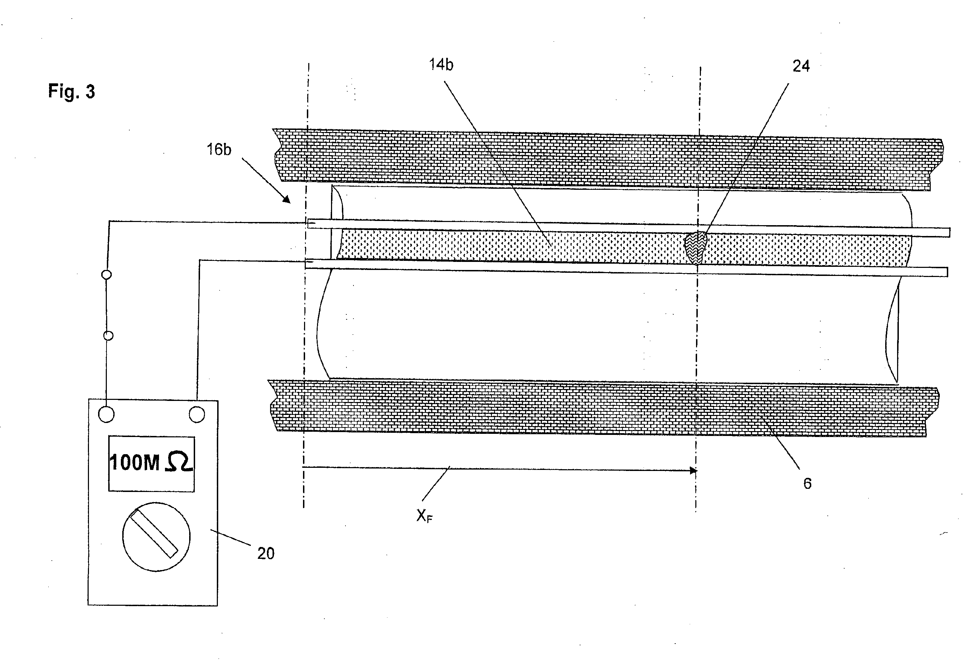

Kommt es hingegen aufgrund einer zu kurzen Bestrahlungsdauer oder einer sonstigen Störung zu einem nachfolgend als Fehlstelle 24 bezeichneten Bereich im streifenförmigen Abschnitt 10 in dem das flüssige leitende Reaktionsharz 14a noch nicht vollständig durchgehärtet ist, so entsteht hierdurch eine elektrisch leitende Verbindung zwischen den beiden Leitern 12a und 12b. Diese im Abstand von den Enden der Leiter 12a, 12b gelegene Fehlstelle 24 führt dazu, dass der vorgegebene Widerstands-Sollwert nicht erreicht wird, sondern ein deutlich niedrigerer ohmscher Widerstand gemessen wird, der in Fig. 3 auf dem Messgerät 20 exemplarisch mit 100 Mega Ohm angegeben wurde.

Um die Position zu bestimmen, an der sich die Fehlstelle 24 befindet, werden die beiden Enden der Leiter 12a, 12b mit einer elektrischen Signalquelle 26 verbunden, die den einen elektrischen Leiter 12a mit wenigstens einem elektrischen Spannung- oder Strompuls 28 beaufschlagt, der über die Fehlstelle 24 und den zweiten elektrischen Leiter 12b zu Signalquelle 26 zurückläuft. Durch Messen der Laufdauer, die ein elektrischer Spannungs- oder Strompuls 28 von der Signalquelle 26 bis zur Fehlstelle 24 und zurück benötigt, lässt sich im Anschluss daran der Abstand X_{F} zwischen der Signalquelle 26 - der nachfolgend der Einfachheit halber mit dem Abstand der Fehlstelle 24 vom zweiten Ende 16b des Auskleidungsschlauchs 1 gleichgesetzt wird - berechnen. Hierzu wird die gemessene Laufdauer mit dem halben Wert der Ausbreitungsgeschwindigkeit der elektrischen Pulse 28 multipliziert, die zuvor bevorzugt durch eine Vergleichsmessung an einem Probemuster des streifenförmigen Abschnitts 10 bestimmt wurde. Es versteht sich, dass sich die Position X_{F} der Fehlstelle 24 durch Berücksichtigen der Länge der Signalzuleitungen, sowie Multiplikation mit bevorzugt empirisch ermittelten Korrekturfaktoren, welche beispielsweise die Pulslänge, Pulsfrequenz, die Länge des Auskleidungsschlauchs, die Temperatur desselben sowie auch die Zusammensetzung des Reaktionsharzes etc. berücksichtigen, mit einer höheren Genauigkeit bestimmen lässt.

Nachdem die ungefähre Position X_{F} der Fehlstelle 24 ermittelt wurde, wird die Strahlungsquelle 8 in den Bereich dieser ungefähren Position X_{F} bewegt und die Innenwand des Auskleidungsschlauchs 1 erneut bestrahlt. Hierbei ist es von Vorteil, wenn während der erneuten Bestrahlung der ohmsche Widerstand an den beiden Leiterenden fortlaufend gemessen wird, um zum einen zu erkennen, ob die korrekte Position der Fehlstelle 24 ermittelt wurde, und zum anderen sicher zu stellen, dass der Nachbestrahlungsvorgang rechtzeitig beendet wird, wenn der vorgegebene Widerstands-Sollwert erreicht worden ist. Hierdurch lässt sich Nachbestrahlungszeit erheblich verringern, was auch die Gefahr reduziert, dass ein im Inneren des Auskleidungsschlauchs bevorzugt ebenfalls enthaltener Innenfolienschlauch, welcher das Fasermaterial 2 auf der Innenseite des Auskleidungsschlauchs gegen den Austritt von Substanzen aus dem Reaktionsharz abdichtet, überhitzt oder beschädigt wird.

### Bezugszeichenliste

- 1: Auskleidungsschlauch
- 2: Fasermaterial des Auskleidungsschlauchs
- 4: Einrichtung zur Überprüfung der Durchhärtung
- 6: zu sanierender Kanal
- 8: Strahlungsquelle
- 10: streifenförmiger Abschnitt aus Vlieswerkstoff
- 12a: erster elektrischer Leiter
- 12b: zweiter elektrischer Leiter
- 14a: elektrisch leitendes flüssiges Reaktionsharz vor der Aushärtung
- 14b: elektrisch leitendes flüssiges Reaktionsharz nach der Aushärtung
- 16a: erstes Ende des Auskleidungsschlauchs
- 16b: zweites Ende des Auskleidungsschlauchs
- 18: elektrische Verbindung
- 20: Messgerät
- 22: Schalter
- 24: Fehlstelle
- 26: elektrische Signalquelle
- 28: Strompuls/Spannungspuls
- X_{F}: Abstand von der Signalquelle zur Fehlstelle

## Patentansprüche

1. Auskleidungsschlauch (1) aus harzgetränktem härtbaren Fasermaterial (2), der nach dem Einziehen und Expandieren innerhalb eines Kanals (6) von innen her durch Einstrahlen von elektromagnetischer Strahlung und/oder Wärme aushärtbar ist, und der eine Einrichtung (4) zur Überprüfung der Durchhärtung des Fasermaterials (2) aufweist,
**dadurch gekennzeichnet, dass**
die Einrichtung einen ersten und einen zweiten, sich im Wesentlichen parallel zueinander über die Länge des Auskleidungsschlauchs (1) hinweg erstreckenden elektrischen Leiter (12a, 12b) umfasst, zwischen denen ein streifenförmiger Abschnitt (10) aus Reaktionsharz (14a, 14b) angeordnet ist, welches im flüssigen Zustand des Harzes (14a) eine höhere elektrische Leitfähigkeit besitzt als im ausgehärteten Zustand (14b) desselben.

2. Auskleidungsschlauch nach Anspruch 1,
**dadurch gekennzeichnet,**
**dass** das Reaktionsharz (14a, 14b) im streifenförmigen Abschnitt (10) in diesem im Wesentlichen homogen verteilte elektrische Ladungsträger in Form eines oder mehrerer Salze enthält.

3. Auskleidungsschlauch nach Anspruch 2,
**dadurch gekennzeichnet,**
**dass** das Reaktionsharz (14a, 14b) im streifenförmigen Abschnitt (10) Natriumchlorid und/oder Natriumfluorid und/oder ein Salz des Ammoniaks und/oder Kaliumchlorid und/oder Kaliumfluorid und/oder ein organisches Salz oder ein Mischung der zuvor genannten Salze enthält.

4. Auskleidungsschlauch nach einem der vorhergehenden Ansprüche,
**dadurch gekennzeichnet,**
**dass** zwischen dem ersten und dem zweiten elektrischen Leiter (12a, 12b) ein das flüssige Reaktionsharz (14a) aufnehmendes Trägermedium, insbesondere ein Polyestervlies oder Glasfaservlies, angeordnet ist.

5. Auskleidungsschlauch nach einem der vorhergehenden Ansprüche,
**dadurch gekennzeichnet,**
**dass** der erste und zweite elektrische Leiter (12a, 12b) auf der Außenseite des Auskleidungsschlauchs (1), insbesondere in Längsrichtung des Auskleidungsschlauchs betrachtet, nebeneinander liegend angeordnet sind.

6. Auskleidungsschlauch nach einem der vorhergehenden Ansprüche,
**dadurch gekennzeichnet,**
**dass** der erste und zweite elektrische Leiter (12a, 12b) im Bereich der äußeren Umfangsfläche auf einander diametral gegenüberliegenden Seiten des Auskleidungsschlauchs (1) angeordnet sind.

7. Auskleidungsschlauch nach einem der vorhergehenden Ansprüche,
**dadurch gekennzeichnet,**
**dass** zwei oder mehrere Paare von ersten und zweiten elektrischen Leitern (12a, 12b) und dazwischen angeordneten streifenförmigen Abschnitte (10) in bevorzugt gleichen Abständen um den Umfang des Auskleidungsschlauchs (1) herum angeordnet sind.

8. Auskleidungsschlauch nach einem der vorhergehenden Ansprüche,
**dadurch gekennzeichnet,**
**dass** sich der streifenförmige Abschnitt (10) mit den elektrischen Leitern (12a, 12b) schraubenförmig um die Außenseite des Fasermaterials (2) herum erstreckt.

9. Verfahren zur Überprüfung der Durchhärtung eines Auskleidungsschlauchs (1) nach einem der vorhergehenden Ansprüche,
**dadurch gekennzeichnet,**
**dass** zur abschließenden Kontrolle der vollständigen Durchhärtung des Reaktionsharzes nach dem Aushärten des Reaktionsharzes der elektrische Widerstand an zwei benachbarten Enden des ersten und zweiten elektrischen Leiters (12a, 12b) erfasst und im Anschluss daran der erfasste Widerstandswert mit einem vorgegebenen Widerstands-Sollwert verglichen wird.

10. Verfahren nach Anspruch 9,
**dadurch gekennzeichnet,**
**dass** das Aushärten des Reaktionsharzes (14a) durch eine Strahlungsquelle (8), insbesondere eine UV-Strahlungsquelle erfolgt, die durch den Innenraum des Auskleidungsschlauchs (1) hindurch bewegt wird, und dass die Geschwindigkeit, mit der die Strahlungsquelle (8) zum Aushärten des Reaktionsharzes durch den Auskleidungsschlauch (1) hindurch bewegt wird, in Abhängigkeit vom momentan erfassten Widerstandswert verändert wird.

11. Verfahren nach einem der Ansprüche 9 oder 10,
**dadurch gekennzeichnet,**
**dass** die freiliegenden benachbarten Enden des ersten und zweiten elektrischen Leiters (12a, 12b) an einem ersten Ende (16a) des Auskleidungsschlauchs (1) vor dem Beginn der Aushärtung des Reaktionsharzes (14a) elektrisch leitend miteinander verbunden werden, und dass im Anschluss daran der Innenwiderstand der in Reihe geschalteten ersten und zweiten Leiter (12a, 12b) am gegenüberliegenden Ende (16b) des Auskleidungsschlauchs (1) erfasst wird.

12. Verfahren nach einem der Ansprüche 9 bis 11,
**dadurch gekennzeichnet,**
**dass** der erste und zweite elektrische Leiter (12a, 12b) bevorzugt an den benachbarten Enden der Leiter über eine elektrische Signalquelle (26) mit wenigstens einem elektrischen Puls (28) beaufschlagt und die Laufdauer des Pulses erfasst wird, wenn der elektrische Widerstand zwischen dem ersten und zweiten elektrischen Leiter (12a, 12b) den vorgegebenen Widerstands-Sollwert unterschreitet, und dass aus der Laufdauer des wenigstens einen elektrischen Pulse die örtliche Position (X_{F}) eines nicht vollständig durchgehärteten Bereich (24) des Auskleidungsschlauchs (1) bestimmt wird.

13. Verfahren nach einem der Ansprüche 9 bis 12,
**dadurch gekennzeichnet,**
**dass** an der örtlichen Position (X_{F}) eines nicht vollständig durchgehärteten Bereichs (24) des Auskleidungsschlauchs (1) eine lokale Nachhärtung des Reaktionsharzes (14a, 14b) durch Einbringen von elektromagnetischer Strahlung und/oder Wärme erfolgt, wobei während des Nachhärtens der ohmsche elektrische Widerstand an den benachbarten Enden der beiden elektrischen Leiter (12a, 12b) erfasst und beim Erreichen des vorgegebenen Widerstands-Sollwertes die Nachhärtung beendet wird.

## Claims

1. Lining hose (1) consisting of a resin-saturated curable fibre material (2), curable after insertion and expansion within a channel (6) from the inside through irradiation with electromagnetic radiation and/or heat, and comprising a means (4) for inspecting the complete curing of the fibre material (2),
**characterised in that**
the means comprises a first and a second electrical conductor (12a, 12b), extending substantially parallel with each other across the length of the lining hose (1), between which a strip-shaped section (10) consisting of reaction resin (14a, 14b) is located, which has higher electrical conductivity in a liquid condition of the resin (14a) than in a cured condition of the same (14b).

2. Lining hose according to claim 1,
**characterised in that**
the reaction resin (14a, 14b) contains electrical charge carriers in the form of one or more salts, distributed substantially homogenously in the strip-shaped section (10) of the same.

3. Lining hose according to claim 2,
**characterised in that**
the reaction resin (14a, 14b) contains sodium chloride and/or sodium fluoride and/or a salt of the ammonia and/or potassium chloride and/or potassium fluoride and/or an organic salt or a mixture of the above mentioned salts in the strip-shaped section (10).

4. Lining hose according to one of the preceding claims,
**characterised in that**
a carrier medium absorbing the liquid reaction resin (14a), in particular a polyester fleece or a fibreglass fleece, is located between the first and the second electrical conductor (12a, 12b).

5. Lining hose according to one of the preceding claims,
**characterised in that**
the first and the second electrical conductor (12a, 12b) are located to lie next to each other on the outside of the lining hose (1), in particular when viewed in a longitudinal direction of the lining hose.

6. Lining hose according to one of the preceding claims,
**characterised in that**
the first and the second electrical conductor (12a, 12b) are located on diametrically opposing sides of the lining hose (1) in the area of the outer circumference surface.

7. Lining hose according to one of the preceding claims,
**characterised in that**
two or more pairs of first and second electrical conductors (12a, 12b) and strip-shaped sections (10) located therebetween are distributed around the circumference of the lining hose (1) at preferably equal distances.

8. Lining hose according to one of the preceding claims,
**characterised in that**
the strip-shaped section (10) with the electrical conductors (12a, 12b) extends in a helical fashion around the outside of the fibre material (2).

9. Method for inspecting the complete curing of a lining hose (1) according to one of the preceding claims,
**characterised in that**
electrical resistance is recorded at two adjacent ends of the first and second electrical conductor (12a, 12b) after curing the reaction resin for the final control of the complete curing of the reaction resin, and that the recorded resistance is compared with a predetermined resistance target value following this.

10. Method according to claim 9,
**characterised in that**
the curing of the reaction resin (14a) is realised by means of a radiation source (8), in particular a UV radiation source, that is moved through the interior of the lining hose (1), and **in that** the speed with which the radiation source (8) is moved through the lining hose (1) for curing the reaction resin is changed depending on the currently recorded resistance value.

11. Method according to one of the claims 9 or 10,
**characterised in that**
the exposed adjacent ends of the first and the second electrical conductor (12a, 12b) are connected with each other in an electrically conductive way at a first end (16a) of the lining hose (1) prior to the start of curing the reaction resin (14a), and **in that** the interior resistance of the first and second conductors (12a, 12b) switched in sequence is recorded at the opposite end (16b) of the lining hose (1) following this.

12. Method according to one of the claims 9 to 11,
**characterised in that**
at least one electrical pulse (28) is applied to the first and second electrical conductor (12a, 12b), preferably at the adjacent ends of the conductors, via an electrical signal source (26), and the period of the pulse is recorded when the electrical resistance between the first and second electrical conductor (12a, 12b) falls below the predetermined resistance target value, and **in that**
the local position (X_{F}) of a not completely cured area (24) of the lining hose (1) is determined from the period of the at least one electrical pulse.

13. Method according to one of the claims 9 to 12,
**characterised in that**
localised post-curing of the reaction resin (14a, 14b) is realised through inserting electromagnetic radiation and/or heat in the local position (X_{F}) of a not completely cured area (24) of the lining hose (1), whereby the ohmic electrical resistance at the adjacent ends of the two electrical conductors (12a, 12b) is recorded during post-curing, and post-curing is terminated when the predetermined resistance target value is reached.

## Revendications

1. Gaine de chemisage (1) en matériau fibreux (2) durcissable imprégné de résine, qui, après introduction et expansion à l'intérieur d'une canalisation (6), est capable de durcir de l'intérieur par irradiation de rayonnement électromagnétique et/ou de chaleur, et qui comporte des moyens (4) de vérification du durcissement du matériau fibreux (2),
**caractérisée en ce que**
lesdits moyens comprennent un premier et un deuxième conducteur électrique (12a, 12b) qui s'étendent sensiblement parallèlement l'un à l'autre sur la longueur de la gaine de chemisage (1) et entre lesquels est disposée une partie en forme de bande (10) en résine de réaction (14a, 14b) qui à l'état liquide de la résine (14a) possède une plus grande conductivité électrique qu'à l'état durci (14b) de la résine.

2. Gaine de chemisage selon la revendication 1,
**caractérisée en ce que**
la résine de réaction (14a, 14b) contient dans la partie en forme de bande (10) des porteurs de charge électriques sous forme d'un ou de plusieurs sels, qui y sont répartis de façon sensiblement homogène.

3. Gaine de chemisage selon la revendication 2,
**caractérisée en ce que**
la résine de réaction (14a, 14b) contient dans la partie en forme de bande (10) du chlorure de sodium et/ou du fluorure de sodium et/ou un sel de l'ammoniac et/ou du chlorure de potassium et/ou du fluorure du potassium et/ou un sel organique ou un mélange des sels cités ci-dessus.

4. Gaine de chemisage selon l'une des revendications précédentes,
**caractérisée en ce que**
un milieu support recevant la résine de réaction liquide (14a), en particulier un non-tissé en polyester ou un non-tissé en fibres de verre, est disposé entre le premier et le deuxième conducteur électrique (12a, 12b),

5. Gaine de chemisage selon l'une des revendications précédentes,
**caractérisée en ce que**
le premier et le deuxième conducteur électrique (12a, 12b) sont disposés sur le côté extérieur de la gaine de chemisage (1), vu en particulier dans le sens de la longueur de la gaine de chemisage, l'un à côté de l'autre.

6. Gaine de chemisage selon l'une des revendications précédentes,
**caractérisée en ce que**
le premier et le deuxième conducteur électrique (12a, 12b) sont disposés au niveau de la surface circonférentielle extérieure sur des côtés diamétralement opposés l'un par rapport à l'autre de la gaine de chemisage (1).

7. Gaine de chemisage selon l'une des revendications précédentes,
**caractérisée en ce que**
deux ou plusieurs paires de premier et deuxième conducteurs électriques (12a, 12b) et de parties en forme de bande (10) intercalées sont disposées, à des distances de préférence égales, autour de la circonférence de la gaine de chemisage (1).

8. Gaine de chemisage selon l'une des revendications précédentes,
**caractérisée en ce que**
la partie en forme de bande (10) avec les conducteurs électriques (12a, 12b) s'étend en hélice sur le côté extérieur du matériau fibreux (2).

9. Procédé de vérification du durcissement d'une gaine de chemisage (1) selon l'une des revendications précédentes,
**caractérisé en ce que**
pour le contrôle final du durcissement complet de la résine de réaction, après durcissement de celle-ci, on détecte la résistance électrique à deux extrémités voisines des premier et deuxième conducteurs électriques (12a, 12b), puis on compare la valeur détectée de la résistance à une valeur de consigne prédéfinie de la résistance.

10. Procédé selon la revendication 9,
**caractérisé en ce que**
le durcissement de la résine de réaction (14a) s'effectue par une source de rayonnement (8), en particulier une source de rayonnement UV, que l'on déplace à travers l'intérieur de la gaine de chemisage (1), et **en ce que** la vitesse à laquelle on déplace la source de rayonnement (8) à travers l'intérieur de la gaine de chemisage (1) pour durcir la résine de réaction, est modifiée en fonction de la valeur de résistance détectée sur le moment.

11. Procédé selon l'une des revendications 9 à 10,
**caractérisé en ce que**
on relie entre elles de manière électriquement conductrice les extrémités voisines libres des premier et deuxième conducteurs électriques (12a, 12b) avant le début du durcissement de la résine de réaction (14a) à une première extrémité (16a) de la gaine de chemisage (1), et **en ce qu'**on détermine ensuite la résistance interne des premier et deuxième conducteurs (12a, 12b) reliés en série à l'extrémité opposée (16b) de la gaine de chemisage (1).

12. Procédé selon l'une des revendications 9 à 11,
**caractérisé en ce que**
on alimente les premier et deuxième conducteurs électriques (12a, 12b) de préférence aux extrémités voisines des conducteurs, par l'intermédiaire d'une source de signal électrique (26), avec au moins une impulsion électrique (28) et on détecte la durée de l'impulsion lorsque la résistance électrique entre les premier et deuxième conducteurs (12a, 12b) est inférieure à la valeur de consigne prédéfinie de la résistance, et **en ce qu'**on détermine à partir de la durée de la au moins une impulsion électrique l'emplacement (X_{F}) d'une zone non complètement durcie (24) de la gaine de chemisage (1).

13. Procédé selon l'une des revendications 9 à 12,
**caractérisé en ce que**
à l'emplacement (X_{F}) d'une zone non complètement durcie (24) de la gaine de chemisage (1), on procède à un postdurcissement local de la résine de réaction (14a, 14b) par introduction de rayonnement électromagnétique et/ou de chaleur, et pendant le postdurcissement on détermine la résistance ohmique aux extrémités voisines des deux conducteurs électriques (12a, 12b) et on met fin au postdurcissement lorsque la valeur de consigne prédéfinie de la résistance est atteinte.
